# EUROPEAN PATENT APPLICATION

(11) **EP 4 770 022 A1**
(43) Date of publication of application: **01.07.2026**
(21) Application number: 25225775.3
(22) Date of filing: 19.12.2025
(51) Int. Cl.: H04L 12/40

(54) **SERIAL WIRED COMMUNICATIONS NETWORK EXTENDING FOR SECURITY SURVEILLANCE NETWORK**

(30) Priority: 30.12.2024 US 202419005698
(71) Applicant: Robert Bosch GmbH, 70442 Stuttgart (DE)
(72) Inventor: Yu, Zhen, 70442 Stuttgart (DE)
(74) Representative: Winter, Brandl - Partnerschaft mbB

(57) **Abstract**

Systems and methods directed to an electronic communications system extender device of a wired security surveillance communications network. The device includes a first transmitter configured to transmit communications over a first serial communications bus and a first receiver configured to receive communications over the first serial communications bus. The device also includes a second transmitter configured to transmit communications over a second serial communications bus and a second receiver configured to receive communications from the second serial communications bus. The device includes a processor configured to receive a communication from the first receiver from the first bus, transmit, via the second transmitter, the communication over the second bus in response to receiving the communication, and lock out, during transmission of the communication, the first transmitter from transmitting over the first serial communications bus.

## Description

### FIELD

This application relates generally to the field of wired serial communications networks for a security surveillance system.

### BACKGROUND

Security surveillance systems may be implemented using a serial communications network that connects a control panel to various peripheral devices. Peripheral devices in surveillance systems may include sensors (for example, surveillance cameras, infrared sensors, RFID/card scanners, etc.), human interface devices (for example, keypads, touchscreen displays, etc.), and output devices (for example, audio alarms, visual alert systems, etc.). The control panel may communicate with each of these peripheral devices via wired, half-duplex communications.

### BRIEF DESCRIPTION OF THE DRAWINGS

The accompanying figures, where like reference numerals refer to identical or functionally similar elements throughout the separate views, together with the detailed description below, are incorporated in and form part of the specification, and serve to further illustrate aspects, examples, aspects, and features of concepts that include the claimed subject matter and explain various principles and advantages of those aspects, examples, aspects, and features.
FIG. 1 is a block diagram illustrating a communications system according to various examples.
FIG. 2 illustrates an electronic communications extender device of the system of FIG. 1 according to various examples.
FIG. 3 illustrates a control panel of the system of FIG. 1 according to various examples.
FIG. 4 is a block diagram illustrating a lock out system of the electronic communications extender device of FIG. 2 according to various examples.
FIG. 5 is a flowchart of a method of extending serial communications implemented by the device of FIG. 2 in accordance with various examples.
FIG. 6 is a circuit diagram illustrating an interlock control circuit of the lock out system of FIG. 4 according to various examples.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of examples, aspects, and features illustrated.

In some instances, the apparatus and method components have been represented where appropriate by conventional symbols in the drawings, showing only those specific details that are pertinent to understanding the of various aspects, examples, aspects, and features so as not to obscure the disclosure with details that will be readily apparent to those of ordinary skill in the art having the benefit of the description herein.

### DETAILED DESCRIPTION

Security surveillance systems implemented with wired communications may be limited in the physical area that the network can effectively cover. For example, for a large premise (for example, an airport, a warehouse, a mall, an exhibition center, etc.), longer connections (and additional peripheral devices) between peripheral e.g., devices on the edge of the network) devices and a central control panel may be necessary. However, long connections (for example, approximately 1000 ft) are susceptible to higher wire resistance, which may introduce too large of a voltage drop across the connection for a peripheral device's working voltage range. Additionally, long connections are susceptible to higher capacitance loads. Any device added to the connection will introduce an additional capacitance load to the connection, which may result in distortion of communication signals through the connection. Thus, the network may be limited by both the distance between a peripheral device and the control panel and the number of peripheral devices on a given connection.

One solution to implement a wired network over a wide area is to install multiple independent systems across the desired area. However, such systems may be complicated and expensive to implement and manage. Another solution is to have a "master" control panel manage several "slave" control panels that each manage a respective number of peripheral devices. However, again, such a system may be expensive as the software and processing power required for both the master and the slave control panels may be considerably large.

To address these problems, examples presented herein provide an electronic communications extender device for implementation in a wired serial communications network. The extender device acts as an intermediary device within the network and is configured to operate in an extender mode. As described in more detail below, such a mode allows for more devices to be added to the same network and for the network to cover a wider physical/geographical area.

In some aspects, the techniques described herein relate to an electronic communications system extender device. The device includes a first transmitter configured to transmit communications over a first serial communications bus, the first serial communications bus being connected to a first electronic communications device upstream from the electronic communications system extender device and a first receiver configured to receive communications over the first serial communications bus. The device also includes a second transmitter configured to transmit communications over a second serial communications bus and a second receiver configured to receive communications from the second serial communications bus, the second serial communications bus being connected to a second electronic communications device downstream from the electronic communications system extender device. The device also includes an electronic processor configured to detect a first communication from the first receiver from the first serial communications bus, transmit, via the second transmitter, the first communication from the first receiver over the second serial communications bus in response to receiving the communication from the first receiver, and lock out, during transmission of the first communication over the second serial communications bus, the first transmitter from transmitting over the first serial communications bus. The electronic processor is further configured to detect a second communication from the second receiver from the second serial communications bus, transmit, via the first transmitter, the second communication from the second receiver over the first serial communications bus in response to receiving the second communication from the second receiver, and lock out, during transmission of the second communication over the first serial communications bus, the second transmitter from transmitting over the second serial communications bus.

Some aspects are directed to a wired communications network system including a first electronic communications device, a second electronic communications device, and an electronic communications system extender device. The device includes a first transmitter configured to transmit communications over a first serial communications bus, the first serial communications bus being connected to a first electronic communications device upstream from the electronic communications system extender device and a first receiver configured to receive communications over the first serial communications bus. The device also includes a second transmitter configured to transmit communications over a second serial communications bus and a second receiver configured to receive communications from the second serial communications bus, the second serial communications bus being connected to a second electronic communications device downstream from the electronic communications system extender device. The device also includes an electronic processor configured to receive a first communication from the first receiver from the first serial communications bus, transmit, via the second transmitter, the first communication from the first receiver over the second serial communications bus in response to receiving the communication from the first receiver, and lock out, during transmission of the first communication over the second serial communications bus, the first transmitter from transmitting over the first serial communications bus. The electronic processor is also configured to receive a second communication from the second receiver from the second serial communications bus, transmit, via the first transmitter, the second communication from the second receiver over the first serial communications bus in response to receiving the second communication from the second receiver, and lock out, during transmission of the second communication over the first serial communications bus, the second transmitter from transmitting over the second serial communications bus.

Some aspects are directed to a method of operating an electronic communications system extender device of a wired security surveillance communications network. The electronic communications system extender device includes a first transmitter configured to transmit communications over a first serial communications bus, the first serial communications bus being connected to a first electronic communications device upstream from the electronic communications system extender device, and a first receiver configured to receive communications over the first serial communications bus. The device also includes a second transmitter configured to transmit communications over a second serial communications bus and a second receiver configured to receive communications from the second serial communications bus, the second serial communications bus being connected to a second electronic communications device downstream from the electronic communications system extender device. The method includes receiving a first communication from the first receiver from the first serial communications bus, transmitting, via the second transmitter, the first communication from the first receiver over the second serial communications bus in response to receiving the communication from the first receiver, and locking out, during transmission of the first communication over the second serial communications bus, the first transmitter from transmitting over the first serial communications bus. The method also includes receiving a second communication from the second receiver from the second serial communications bus, transmitting, via the first transmitter, the second communication from the second receiver over the first serial communications bus in response to receiving the second communication from the second receiver, and locking out, during transmission of the second communication over the first serial communications bus, the second transmitter from transmitting over the second serial communications bus.

Before any aspects, features, or instances are explained in detail, it is to be understood that the aspects, features, or instances are not limited in their application to the details of construction and the arrangement of components set forth in the following description or illustrated in the following drawings. Other instances are possible and are capable of being practiced or of being carried out in various ways.

It should also be noted that a plurality of hardware and software-based devices, as well as a plurality of different structural components may be utilized in various implementations. Aspects, features, and instances may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one instance, the electronic based aspects of the invention may be implemented in software (for example, stored on non-transitory computer-readable medium) executable by one or more processors. As a consequence, it should be noted that a plurality of hardware and software-based devices, as well as a plurality of different structural components may be utilized to implement the invention. For example, "control units" and "controllers" described in the specification can include one or more electronic processors, one or more memories including a non-transitory computer-readable medium, one or more input/output interfaces, and various connections (for example, a system bus) connecting the components.

Unless the context of their usage unambiguously indicates otherwise, the articles "a," "an," and "the" should not be interpreted as meaning "one" or "only one." Rather these articles should be interpreted as meaning "at least one" or "one or more." Likewise, when the terms "the" or "said" are used to refer to a noun previously introduced by the indefinite article "a" or "an," "the" and "said" mean "at least one" or "one or more" unless the usage unambiguously indicates otherwise.

It should also be understood that although certain drawings illustrate hardware and software located within particular devices, these depictions are for illustrative purposes only. In some embodiments, the illustrated components may be combined or divided into separate software, firmware, and/or hardware. For example, instead of being located within and performed by a single electronic processor, logic and processing may be distributed among multiple electronic processors. Regardless of how they are combined or divided, hardware and software components may be located on the same computing device or may be distributed among different computing devices connected by one or more networks or other suitable connections or links.

Thus, in the claims, if an apparatus or system is claimed, for example, as including an electronic processor or other element configured in a certain manner, for example, to make multiple determinations, the claim or claim element should be interpreted as meaning one or more electronic processors (or other element) where any one of the one or more electronic processors (or other element) is configured as claimed, for example, to make some or all of the multiple determinations collectively. To reiterate, those electronic processors and processing may be distributed.

Also, it is to be understood that the phraseology and terminology used herein is for the purpose of description and should not be regarded as limiting. The terms "mounted," "connected" and "coupled" are used broadly and encompass both direct and indirect mounting, connecting, and coupling. Further, "connected" and "coupled" are not restricted to physical or mechanical connections or couplings, and can include electrical connections or couplings, whether direct or indirect. Also, electronic communications and notifications may be performed using any known means including wired connections, wireless connections, etc.

For ease of description, some or all of the example systems presented herein are illustrated with a single exemplar of each of its component parts. Some examples may not describe or illustrate all components of the systems. Other instances may include more or fewer of each of the illustrated components, may combine some components, or may include additional or alternative components.

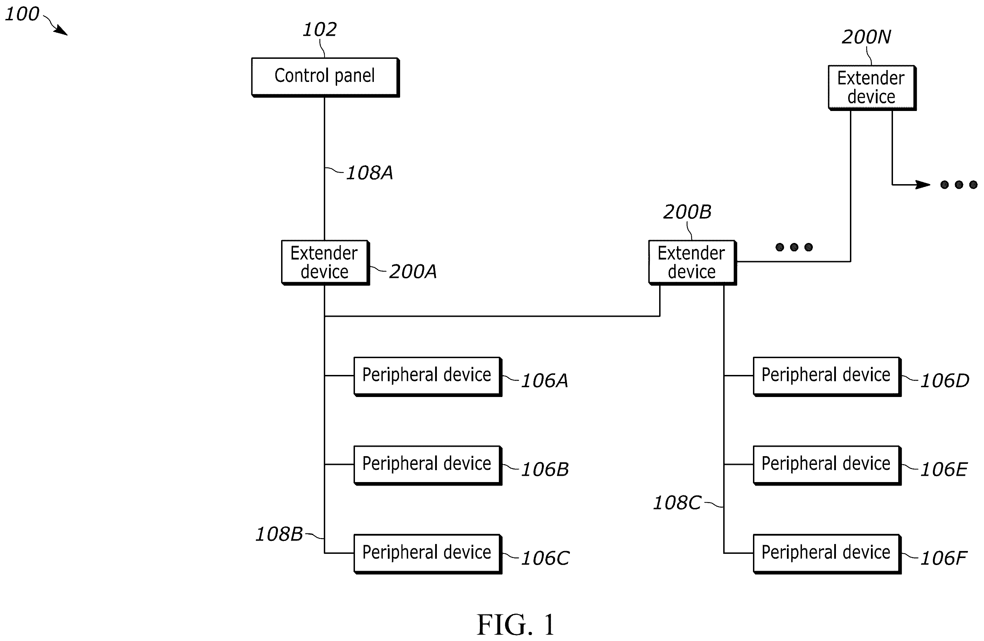

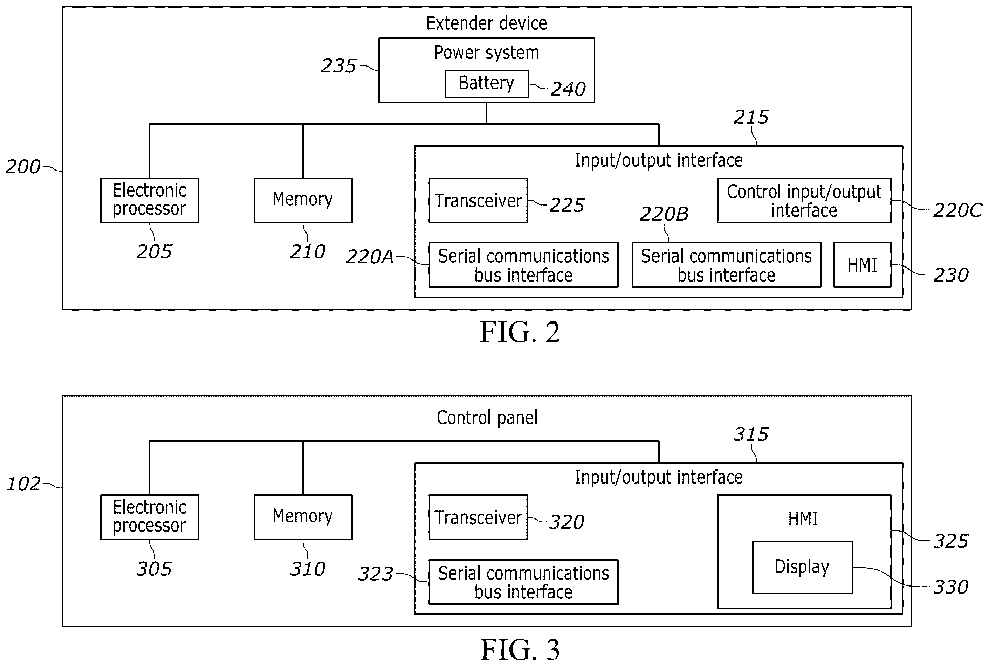

FIG. 1 is a block diagram of a security surveillance system network 100 in accordance with some aspects. In some aspects, the security surveillance system network 100 is for monitoring a single, physical building structure or area (for example, a commercial or business building, a store, a warehouse facility, a shipping yard, etc.). The network 100 includes a control panel 102 and one or more of an electronic communication extender device (for example, electronic communication extender device 200A, 200B, and 200N, singularly referred to herein as electronic communication extender device 200). The control panel 102 is configured to communicate via a wired, half-duplex serial communication with at least one extender device 200. In the illustrated example, the control panel 102 is communicatively coupled directly to a serial bus interface of the extender device 200 (illustrated in and described in more detail below with respect to FIG. 2) via a serial wired communication bus 108A. In some aspects, the control panel 102 may communicate with the extender device 200 through another network device (for example, a network switch or another extender device 200). As illustrated in FIG. 1, for example, the extender device 200B exchanges communications with the control panel 102 through the extender device 200A.

The control panel 102 may be a user electronic communications device suitable for handling and processing communications of the network 100. The control panel 102 may be or include, for example, a desktop or laptop computer, a server, a tablet, and the like.

Each extender device 200 (described in more detail below with respect to FIG. 2) includes at least two serial communication interfaces (ports) through which the respective extender device 200 each exchange wired serial communications with one or more additional electronic communications devices. The additional devices may include one or more peripheral devices (for example, peripheral devices 106A - 106F, singularly referred to herein as peripheral device 106), one or more extender devices 200, the control panel 102, or some combination thereof depending on the particular topology of the network 100.

The peripheral devices 106 include one or more security monitoring/access control devices being or including sensor modules (for example, surveillance cameras, infrared sensors, RFID/card scanners, etc.), human interface modules (for example, keypads, touchscreen displays, etc.), and output modules (for example, visual alarms, audio alarms, etc.). The peripheral devices 106 may include, for example, one or more sensors (for example, biometric sensors, RFID tag sensors, surveillance cameras, motion sensors, etc.), human interfaces (for example, a keypad, a pushbutton, etc.), entryway access control modules (for example, an electronic door lock or a window lock, etc.), audible/visual alarms (for example, a siren, a warning light, etc.) and the like.

In the example illustrated, the extender device 200A communicates with the control panel 1002 via the serial communications bus 108A. The extender device 200A also communicates with peripheral devices 106A - 106C via a serial communications bus 108B. The extender device 200A additionally communicates with the extender device 200B via the serial communications bus 108B. The extender device 200B shares the serial communications bus 108B with the extender device 200A and communicates with devices 106D - 106F via a serial communications bus 108C. In some aspects, the extender device 200 is configured to provide power (for example, with respect to device 200A, via the respective serial communications buses 108B and 108C or via a separate connection) to one or more devices connected downstream from the extender device 200. In such aspects, the devices downstream of the extender device 200 may include one or more of a peripheral device 106, another extender device 200, or some combination thereof. For example, in the example illustrated in FIG. 1, the extender device 200A may be configured to provide power (for example, from a battery 240 described with respect to FIG. 2 below) to the peripheral devices 106A - 106C and the extender device 200B. Additionally, with reference to the example illustrated in FIG. 1, the extender device 200B may be configured to provide power to the peripheral devices 106D - 106F.

Each extender devices 200 is configured to operate in an extender mode. In the extender mode, each extender device 200 is configured to receive communications from the control panel 102 (directly or from another extender device 200 as described above) at a first serial bus interface via a bus (for example, with respect to the extender device 200A, bus 108A) according to a particular communications protocol. The extender device 200 transmits the received communications according to the particular communications protocol to one or more devices from a second serial bus interface of the extender device 200 via a second communications bus. For example, with respect to the extender device 200A, the device 200A transmits communications received from the bus 108A to one or more devices 106A - C and the extender device 200B via the bus 108B. The extender device 200B is configured to receive the communications from the bus 108B and forward the communications (according to the same protocol) to the devices 106D - 106F of the bus 108C. As illustrated, additional extender device 200N may be connected (for example, daisy-chained) together from the extender device 200B via the bus 108C and may further communicate with one or more additional peripheral devices 106, extender devices 200, or some combination thereof.

As used herein, with respect to a single extender device 200, the term "upstream" refers to devices (and respective connections) between (and including) the control panel 102 and the extender device 200. As also used herein, the term "downstream" with respect to a single extender device 200 refers to devices between the extender device 200 and any peripheral devices 106 at the edge of the network 100. As an example, with respect the extender device 200A of FIG. 1, the control panel 102 is a device upstream from the extender device 200A and devices 106A - 106F and the extender device 200B are devices downstream from the extender device 200A.

It should also be understood, as further described below, that the topology of the network 100 is not limited to the example illustrated in FIG. 1. For example, a different number of extender devices 200N (operating in the extender mode) may be communicatively coupled directly to the control panel 102 and to any number of peripheral device 106 or extender devices 200 (operating in the extender mode) communicatively coupled downstream therefrom.

It should also be understood that, although the examples described herein are generally in regard to communications output by the control panel 102 and transmitted to one or more devices downstream from the control panel 102 within the network 100, one or more of the downstream devices may also provide communications back to the control panel 102. For example, the peripheral device 106F may transmit a communication to the control panel 102 through the serial communications bus 108C to the extender device 200B. The extender device 200B transmits the received communication to the extender device 200A through the bus 108B, and the extender device 200A transmits the received communication to the control panel 102 through the bus 108A.

FIG. 2 is a diagram of an example of the extender device 200. In the aspect illustrated, the extender device 200 includes an electronic processor 205, a memory 210, an input/output interface 215. In some aspects, the extender device 200 includes a transceiver 225. The illustrated components, along with other various modules and components (not shown) are coupled to each other by or through one or more control or data buses that enable communication therebetween.

The electronic processor 205 obtains and provides information (for example, from the memory 210 and/or the input/output interface 215), and processes the information by executing one or more software instructions or modules, capable of being stored, for example, in a random access memory ("RAM") area of the memory 210 or a read only memory ("ROM") of the memory 210 or another non-transitory computer readable medium (not shown). The software can include firmware, one or more applications, program data, filters, rules, one or more program modules, and other executable instructions. The electronic processor 205 is configured to retrieve from the memory 210 and execute, among other things, software related to the control processes and methods described herein.

The memory 210 can include one or more non-transitory computer-readable media and includes a program storage area and a data storage area. The program storage area and the data storage area can include combinations of different types of memory, as described herein. In some aspects, some or all of the memory 210 is integrated into the electronic processor 205.

The input/output interface 215 is configured to receive input and to provide system output. The input/output interface 215 obtains information and signals from, and provides information and signals to, (for example, over one or more wired and/or wireless connections) devices both internal and external to the extender device 200. The input/output interface may include one or more wired interfaces (e.g., a USB port, an Ethernet port, etc.) and/or one or more wireless transceivers (for example, the transceiver 225) or interfaces (configured, for example, to transmit and/or receive information via one or more wireless communication protocols such as 802.11a/b/g/n, Bluetooth, near field communication (NFC), ZigBee, and so forth).

For example, the input/output interface 215 includes a first serial communications bus interface 220A and a second serial communications bus interface 220B. As described above, the extender device 200 is configured to communicate with one or more devices of the network 100 via a respective wired bus connection at each of the serial communications bus interfaces 220A, 220B. In some aspects, the device 200 only includes two serial communications bus interfaces.

In some aspects, the extender device 200 includes a control input/output interface 220C for communicatively coupling to one or more additional devices of the network 100 (not shown). The interface 220C may be, for example a port for a wired connection (for example, an Ethernet port).

In some aspects, the extender device 200 includes a transceiver 225 (part of the input/output interface 215). The transceiver 225 is configured to transmit and receive wireless communications (for example, from the control panel 102 or another electronic communications device). The transceiver 225 may include various digital and analog components, which for brevity are not described herein and which may be implemented in hardware, software, or a combination of both. Some aspects include separate transmitting and receiving components, for example, a transmitter and a receiver, instead of a combined transceiver 225.

Optionally, in some aspects, the input/output interface 215 includes a human machine interface (HMI) 230. The HMI 230 receives input from, and provides output to, users of the extender device 200. The HMI 230 may include a keypad, switches, buttons, soft keys, indictor lights, haptic vibrators, a display (e.g., a touchscreen), or some combination thereof. In some aspects, the extender device 200 is user configurable via the HMI 230. For example, the mode in which the extender device 200 operates in (for example, the extender mode or an alternative operational mode) is selectable by a user via the HMI 230 in some instances (for example, via a switch or a touchscreen display).

In some aspects, the extender device 200 also includes a power supply system 235. The power supply system 235 includes, among other things, a battery 240. The battery 240 includes one or more batteries that provide power to one or more components of the extender device 200. In some embodiments, the battery 240 is separate from the extender device 200 (for example, disposed within an enclosure separate from the extender device 200). In some aspects, as mentioned above, the extender device 200 is also configured to provide power from the power supply system 235 to one or more additional devices of the network 100 (for example, one or more peripheral devices 106 connected downstream from the extender device 200).

FIG. 3 is a diagram of an example of the control panel 102 in accordance with some aspects. In the example provided, the control panel 102 includes an electronic processor 305, a memory 310, and an input/output interface 315 including a transceiver 320 and, optionally, a human machine interface (HMI) 325. The illustrated components, along with other various modules and components (not shown) are coupled to each other by or through one or more control or data buses that enable communication therebetween.

The electronic processor 305 obtains and provides information (for example, from the memory 310 and/or the input/output interface 315) and processes the information by executing one or more software instructions or modules, capable of being stored, for example, in a random access memory ("RAM") area of the memory 310 or a read only memory ("ROM") of the memory 310 or another non-transitory computer readable medium (not shown). The software can include firmware, one or more applications, program data, filters, rules, one or more program modules, and other executable instructions. The electronic processor 305 is configured to retrieve from the memory 310 and execute, among other things, software to carry out the methods described herein.

The memory 310 can include a program storage area and a data storage area. The program storage area and the data storage area can include combinations of different types of memory, as described herein.

The input/output interface 315 is an electronic communication interface configured to receive input and to provide system output. The input/output interface 315 obtains information and signals from, and provides information and signals to devices (for example, over one or more wired and/or wireless connections) both internal and external to the control panel 102. The input/output interface 315 may include a wireless transmitter or transceiver for wirelessly communicating over the network 100. Alternatively, or in addition to a wireless transmitter or transceiver, the input/output interface 315 may include a port for receiving a cable, such as an Ethernet cable, for communicating over the network 100 or a dedicated wired connection. It should be understood that, in some aspects, the control panel 102 communicates with other devices through one or more intermediary devices, such as routers, gateways, relays, and the like (for example, the network switch 104 of FIG. 1). In some embodiments, the control panel 102 includes one or more of a communications bus interface 323.

As mentioned above, in some aspects the control panel 102 may include the HMI 325. The HMI 325 receives input from, and provides output to, users of the control panel 102. The HMI 325 may include a keypad, switches, buttons, soft keys, indictor lights, haptic vibrators, a display (for example, the display 330) configured, for example, as a touchscreen, or some combination thereof. In some aspects, the control panel 102 is user configurable via the HMI 325. In some aspects, the user is able to access information received from one or more devices of the network 100 via the HMI 325 of the control panel 102.

The display 330 is a suitable display (for example, a liquid crystal display (LCD) touch screen, or an organic light-emitting diode (OLED) touch screen). In some aspects, the control panel 102 displays a graphical user interface (GUI) (for example, generated by the electronic processor 305, from instructions and data stored in the memory 310, and presented on the display 330), that enables a user to interact with the control panel 102. In some aspects, the control panel 102 enables display remotely, for example, using a display (configured similarly to the display of the HMI 220) of one or more of the devices of the network 100 (for example, one or more of the peripheral devices 106A - 106H or an extender device 200) or another suitable device in communication with the control panel 102.

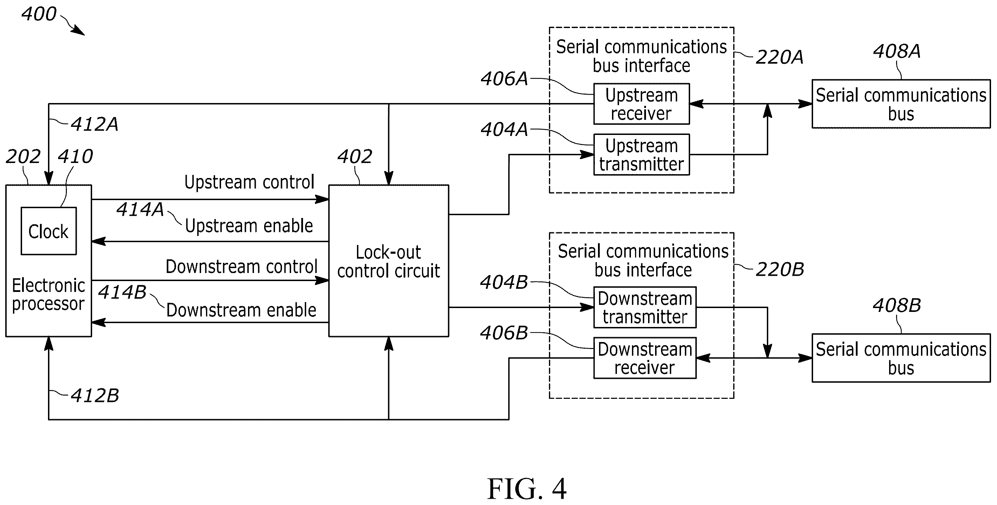

FIG. 4 illustrates a lock out system 400 of the extender device 200 in accordance with some aspects. The system 400 includes the electronic processor 205 and the serial communications bus interfaces 220A and 220B. As illustrated, the system 400 additionally includes a lock out control circuit 402. Each of the serial communications bus interfaces 220A, 220B include a respective transmitter 404A, 404B and a respective receiver 406A, 406B. For ease of description, the serial communications bus interface 220A is described herein as being connected to a first serial communications bus 408A connected to one or more devices upstream of the device 200 and the serial communications bus interface 220B is described herein as being connected to a second serial communications bus 408B connected to one or more devices downstream from the device 200. The transmitter 404A and receiver 406A of the interface 220A are alternatively referred to herein as upstream transmitter 404A and upstream receiver 406A and the transmitter 404B and receiver 406B of the interface 220B are alternatively referred to herein as downstream transmitter 404A and downstream receiver 406A. In some embodiments, the transmitter 404A, 404B and respective receiver 406A, 406B may be integrated into a single component (for example, a transceiver).

As generally described above, the device 200 is configured to receive communications at both interfaces 220A, 220B and output/forward the received communications from the other serial communications bus interface 220B. 220A. The receivers 406A and 406B are each coupled to a respective serial communications bus. Communications received at one of the receivers 406A, 406B of one of the serial bus interfaces 220A, 220B are directed via the lock out control circuit 402 to the transmitter 404B, 404A of the other serial bus interface 220B, 220A. For example, a communication over the upstream serial communications bus may be received at the receiver 406A of the communications interface 220A and transmitted over the downstream serial communications bus via the transmitter 404B of the communications interface 220B.

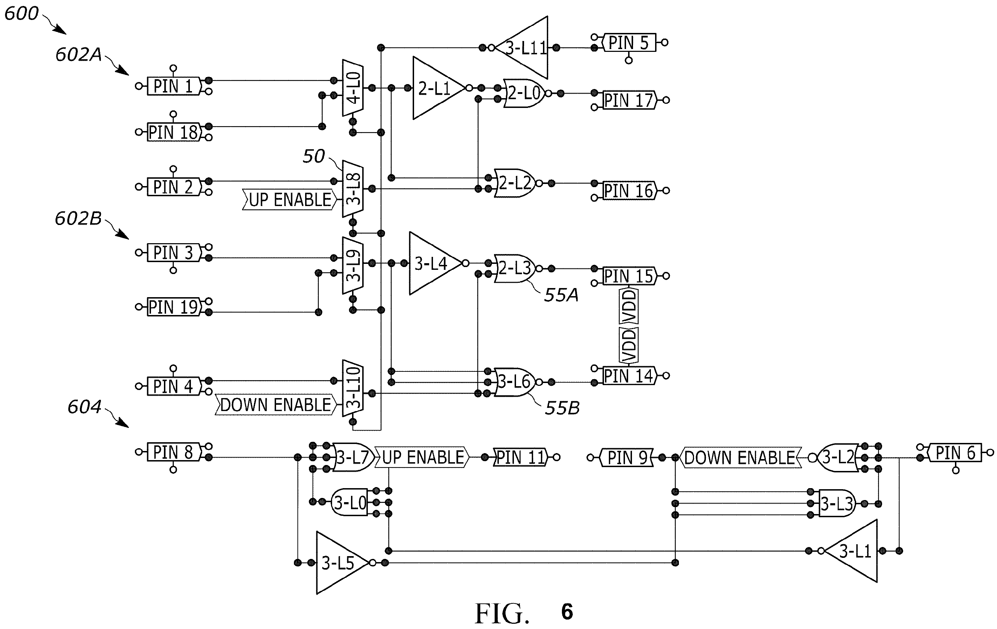

During the transmission of the communication, the receiver (either one of receiver 406A and 406B) at the respective interface transmitting the communication will detect the communication being transmitted. Thus, it may be necessary to prevent the transmitter (transmitter 404B and 404A) of the other serial communications bus interface from transmitting in response to detecting the communication being transmitted from the receiver. For example, with reference to the above example, the communication being transmitted by the transmitter 404B may be detected by the receiver 406B. The received communication may then be forwarded to the transmitter 404A and transmitted over the serial communications bus 408A, which may cause a communications collision with the communication being received at the receiver 406A. Thus, the lock out control circuit 402 (described in more detail below with respect to FIG. 6) is provided to prevent either transmitter 404A, 404B from transmitting another communication ("lock out") while the other transmitter is transmitting. In some aspects, the lock out control circuit 402 is a single programmable logic chip (PLC) controlled by the electronic processor 205. Utilizing a single PLC may be advantageous over other alternative options (for example, utilizing multiple discrete logic chips) as such a solution may be smaller and cheaper.

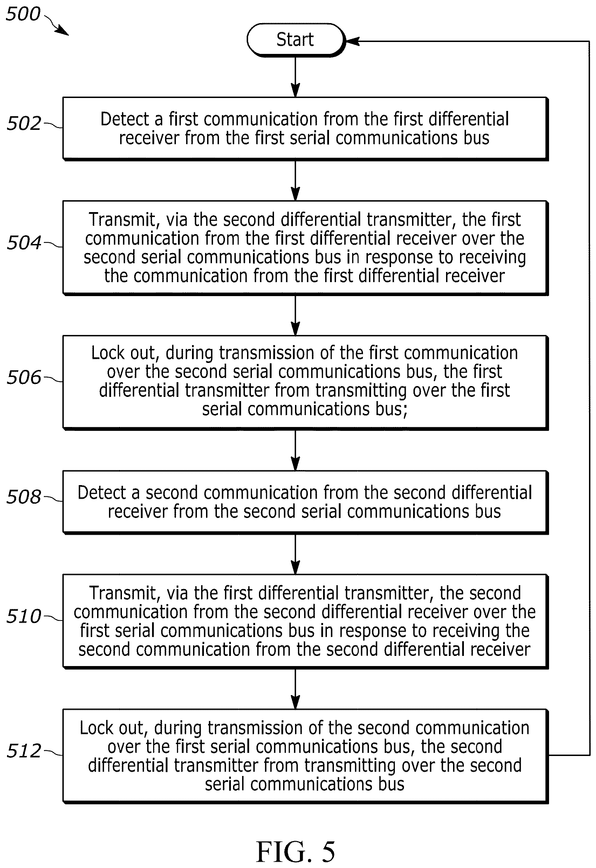

FIG. 5 illustrates an example method 500 of operation of the extender device 200 (in particular, the lock out system 400 of FIG. 4) in accordance with some aspects. The method 500 may be modified or performed differently than the specific example provided. As an example, the method 500 is described as being performed by the extender device 200 and, in particular, by the electronic processor 205.

At block 502, the electronic processor 205 detects a communication from a first receiver from a first serial communications bus. At block 504, the electronic processor 205 transmits, via a second transmitter, the first communication from the first receiver over the second serial communications bus in response to receiving the communication from the first receiver. During the transmission of the first communication over the second serial communications bus, the electronic processor 205 locks out the first transmitter from transmitting over the first serial communications bus (block 506). Following a predetermined transmission time (explained in more detail below), the electronic processor 205 terminates the lock out, allowing the first transmitter to operate again.

In some aspects, the method 500 also includes detecting, via the electronic processor 205, a second communication from the second receiver from the second serial communications bus (block 508). At block 510, the electronic processor 205 transmits, via the first transmitter, the second communication from the second receiver over the first serial communications bus in response to receiving the second communication from the second receiver. The electronic processor 205 also locks out, during transmission of the second communication over the first serial communications bus, the second transmitter from transmitting over the second serial communications bus (block 512). Following a predetermined transmission time (explained in more detail below), the electronic processor 205 terminates the lock out, allowing the second transmitter to operate again.

Both the first communication and the second communication are the same type of wired communications protocol (for example, a universal asynchronous receiver-transmitter (UART) protocol). In some aspects, the communications protocol of the first communication and the second communication is a half-duplex communications protocol. In some aspects, the serial communications buses 408A and 408B are differential half-duplex serial communications buses.

It should be understood that the first communication refers to a communication addressed to one or more devices of the network 100 other than the extender device 200. In some aspects, the extender device 200 receives communications from the control panel 102 addressed to the extender device 200 itself. In such instances, the extender device 200 processes the communications addressed to the extender device 200 accordingly. Otherwise, the extender device 200 forwards the communication as described above.

In some aspects, the extender device 200 acts as a transparent device between the control panel 102 and the devices upstream and downstream from the extender device 200. In other words, the extender device 200 provides communications from the control panel 102 to the devices downstream of the extender device 200 without modification to the original content of the communication. Likewise, the extender device 200 provides communications one or more of the devices downstream from the extender device 200 to the control panel 102 or one or more device upstream from the extender device 200 without modification to the original content of the communication.

In some aspects, when the transmitter 404A, 404B of one of the serial communications bus interfaces 220A, 220B is locked out, communications received at the receiver 406B, 406A of the other serial communications bus interface 220B, 220A may be received. In such instances, the electronic processor 205 may be configured to drop communications received at the receiver 406B, 406A of the other serial communications bus interface 220B, 220A or temporarily store the received communications. In instances where the communication is temporarily stored, following the predetermined transmission time, the transmitter 404A, 404B is no longer locked out, the electronic processor 205 transmits the stored communications from the transmitter 404A, 404B.

In some aspects, detecting a communication at one of the receivers 406A, 406B includes detecting a falling edge of a first bit of the received communication. The electronic processor, in response to detecting the falling edge, locks out the transmitter 404A, 404B by generating, from a clock (clock 410 of FIG. 4 described in more detail below) of the electronic processor 205, a predetermined pulse signal (the predetermined transmission time) corresponding to a frame time of the received communication. The predetermined pulse signal, in some aspects, is approximately 535 microseconds. In some aspects, the clock 410 is a crystal programmable clock. Using an internal clock of the processor 205 as opposed to other solutions (for example, using an RC circuit) may be advantageously cheaper and more compact. Additionally, the clock 410 may be programmable, allowing for simpler customization of the predetermined pulse signal. In aspects where the clock 410 is a crystal clock, such a solution may be more reliable and durable compared to utilizing an RC circuit or similar solutions.

With reference to FIG. 4 as described above, in some aspects, the electronic processor 205 detects a communication received at one of the receivers 406A, 406B. The receiver 406A provides received communication signals to the electronic processor 205 via receiver line 412A. The receiver 406B provides received communication signals to the electronic processor 205 via receiver line 412B.

In instances where the electronic processor 205 determines that a communication signal was received from either one of the lines 412A, 412B, the electronic processor 205 in response, in some aspects, generates and outputs the predetermined pulse signal from the clock 410 corresponding to the frame time of the received communication to an upstream or downstream control input (depending on which receiver 406A, 406B that the communication was received at) of the lock out control circuit 402. In response to receiving the signal at either one of the upstream control input and the downstream control input, the lock out control circuit 402, disconnects the corresponding transmitter 404A, 404B from a corresponding (upstream or downstream) transmit enable signal, preventing the respective transmitter 404A, 404B from transmitting over the corresponding serial communications bus 408A, 408B. In some aspects, the lock out control circuit 402 shares the upstream and downstream transmit enable signals 414A, 414B to the electronic processor 205 (for example, to provide information regarding which transmitter 404A, 404B is currently transmitting or for use as an interrupt).

FIG. 6 is an example interlock circuit 600 within the lock out system 400 of FIG. 4 in accordance with some aspects. In the example shown, the interlock circuit 600 includes an upstream transmission circuit 602A and a downstream transmission circuit 602B and an interlock 604. Each transmission circuit 602A and 602B are connected to a respective one of the transmitters 404A and 404B. For ease of description, operation of the interlock circuit 600 is described below in terms of the transmission circuit 602A with respect to the transmitter 404A transmitting a signal received at the receiver 406B. It should be understood that operation of the transmission circuit 602B with respect to the transmitter 404B is similar to that of the transmission circuit 602A and transmitter 404A described below.

Output pins 17 and 16 of the circuit 602A are connected to the positive and negative differential connections of the transmitter 404A. Input pin 18 is connected to the receiver 406B (i.e., line 412B of FIG. 4). Input pin 2 corresponds to an enable signal from the electronic processor 205 for enabling the serial communications bus 408A for transmission of communications. Input pin 5 is a control input from the electronic processor 205 that enables operation of the circuit 600 (in other words, enables the device 200 to operate in the extender mode). Regarding the interlock 604, pins 6 and 8 are both inputs where the predetermined pulse signal from the clock 410 of the processor 205 is received.

As described above, communications received at one of the transmission circuits (for example, circuit 602B) are transmitted/forwarded to the other transmission circuit (for example, circuit 602A). In the illustrated example, communications received at the receiver 406B are provided at the input pin 18. In instances where the pulse signal is received at pin 8, the interlock 604 outputs the upstream control signal (/UP_ENABLE). This signal, as shown in the transmission circuit 602A, is received at the same multiplexer 50 as the enable signal input (pin 2) for enabling the bus 408A for transmissions from the transmitter 404A.

When the transmitter 404A begins transmitting the signal on the bus 408A, the receiver 406A will also receive the signal since the receiver 406A is also connected to the bus 408A. To prevent the signal received at the receiver 406A from being forwarded to the transmitter 404B, the electronic processor 205 generates, in response to the transmission received at the receiver 406B, another lock out pulse signal on pin 6. Because the lock out pulse signal on pin 8 is present, however, the lock out pulse signal on pin 6 (corresponding to a downstream control signal /DOWN_ENABLE) is blocked, and any signal received at the receiver 406A (pin 19) is prevented from being output via the gates 55A and 55B, thus preventing the transmitter 404B from transmitting ("locking out") on the bus 408B for the duration of the predetermined pulse signal.

In instances where the receiver 406A receives a communication first (at pin 19), the electronic processor 205 generates the pulse signal at pin 6 (corresponding to the downstream control signal /DOWN_ENABLE). As the communication is transmitted via the downstream transmitter 404B, the receiver 406B receives the same communication being transmitted. In response, the processor 205 generates the lock out pulse signal on pin 8 (corresponding to the upstream control signal /UP_ENABLE). However, because the signal on pin 6 is present, the upstream control signal /UP_ENABLE is blocked, thus locking out the transmitter 404A.

Thus, the systems and methods described herein provide for, among other things, an extender device 200 for extending a physical area covered by a wired communications network. In some instances, the distance between an extender device 200 communicatively coupled (via a wired connection) to another device (i.e., the control panel 102, another expansion device 200, or a peripheral device 106) is approximately 1000 feet (ft). As described above, this may provide an inexpensive solution for adding more devices to (for example) a security surveillance system and covering larger physical areas for surveillance.

With regard to the processes, systems, methods, heuristics, etc. described herein, it should be understood that, although the steps of such processes, etc. have been described as occurring according to a certain ordered sequence, such processes could be practiced with the described steps performed in an order other than the order described herein. It further should be understood that certain steps could be performed simultaneously, that other steps could be added, or that certain steps described herein could be omitted. In other words, the descriptions of processes herein are provided for the purpose of illustrating certain implementations and should in no way be construed to limit the claims.

Accordingly, it is to be understood that the above description is intended to be illustrative and not restrictive. Many aspects and applications other than the examples provided would be apparent upon reading the above description. The scope should be determined, not with reference to the above description, but should instead be determined with reference to the appended claims, along with the full scope of equivalents to which such claims are entitled. It is anticipated and intended that future developments will occur in the technologies discussed herein, and that the disclosed systems and methods will be incorporated into such future aspects. In sum, it should be understood that the application is capable of modification and variation.

Various features and advantages of the aspects presented herein are set forth in the following claims.

## Claims

1. An electronic communications system extender device, the device comprising:
a first transmitter configured to transmit communications over a first serial communications bus, the first serial communications bus being connected to a first electronic communications device upstream from the electronic communications system extender device;
a first receiver configured to receive communications over the first serial communications bus;
a second transmitter configured to transmit communications over a second serial communications bus;
a second receiver configured to receive communications from the second serial communications bus, the second serial communications bus being connected to a second electronic communications device downstream from the electronic communications system extender device;
an electronic processor (205) configured to
detect a first communication from the first receiver from the first serial communications bus;
transmit, via the second transmitter, the first communication from the first receiver over the second serial communications bus in response to receiving the communication from the first receiver;
lock out, during transmission of the first communication over the second serial communications bus, the first transmitter from transmitting over the first serial communications bus;
detect a second communication from the second receiver from the second serial communications bus;
transmit, via the first transmitter, the second communication from the second receiver over the first serial communications bus in response to receiving the second communication from the second receiver; and
lock out, during transmission of the second communication over the first serial communications bus, the second transmitter from transmitting over the second serial communications bus.

2. The device of claim 1, wherein the first receiver is configured to continue to receive communications from the first serial communications bus while the second transmitter is locked out and the second receiver is configured to continue to receive communications from the second serial communications bus while the first transmitter is locked out.

3. The device of claim 2, wherein the electronic processor (205) is further configured to transmit communications received at the second receiver while the first transmitter is locked out following transmission of the first communication from the second transmitter and transmit communications received at the first receiver while the second transmitter is locked out following transmission of the second communication from the first transmitter, or
wherein the electronic processor (205) is further configured to drop communications received at the second receiver while the first transmitter is locked out following transmission of the first communication from the second transmitter and drop communications received at the first receiver while the second transmitter is locked out following transmission of the second communication from the first transmitter.

4. The device of claim 1, wherein the electronic processor (205) performs the lock out of the first transmitter and the lock out of the second transmitter via a single programmable logic chip.

5. The device of claim 4, wherein detecting the first communication includes detecting a falling edge of a first bit of the first communication, and
wherein locking out the first transmitter includes
generating, from a clock (410) of the electronic processor, a first predetermined pulse signal corresponding to a frame time of the first communication;
outputting the first predetermined pulse signal to an upstream control input of the programmable logic chip; and
disconnecting, within the programmable logic chip, the first transmitter from an upstream transmit enable signal,
wherein detecting the second communication includes detecting a falling edge of a first bit of the second communication, and
wherein locking out the second transmitter includes
generating, from the clock (410) of the electronic processor (205), a second predetermined pulse signal corresponding to a frame time of the second communication;
outputting the second predetermined pulse signal to a downstream control input of the programmable logic chip; and
disconnecting, within the programmable logic chip, the second transmitter from a downstream transmit enable signal,
wherein, preferably, the clock (410) is a crystal programmable clock.

6. The device of claim 1, wherein the first communication and the second communication are according to a half-duplex communication protocol.

7. A wired communications network system comprising:
a first electronic communications device;
a second electronic communications device; and
an electronic communications system extender device including
a first transmitter configured to transmit communications over a first serial communications bus, the first serial communications bus being connected to a first electronic communications device upstream from the electronic communications system extender device,
a first receiver configured to receive communications over the first serial communications bus,
a second transmitter configured to transmit communications over a second serial communications bus,
a second receiver configured to receive communications from the second serial communications bus, the second serial communications bus being connected to a second electronic communications device downstream from the electronic communications system extender device, and
an electronic processor (205) configured to
receive a first communication from the first receiver from the first serial communications bus,
transmit, via the second transmitter, the first communication from the first receiver over the second serial communications bus in response to receiving the communication from the first receiver,
lock out, during transmission of the first communication over the second serial communications bus, the first transmitter from transmitting over the first serial communications bus,
receive a second communication from the second receiver from the second serial communications bus,
transmit, via the first transmitter, the second communication from the second receiver over the first serial communications bus in response to receiving the second communication from the second receiver, and
lock out, during transmission of the second communication over the first serial communications bus, the second transmitter from transmitting over the second serial communications bus.

8. The system of claim 7, wherein the first receiver is configured to continue to receive communications from the first serial communications bus while the second transmitter is locked out and the second receiver is configured to continue to receive communications from the second serial communications bus while the first transmitter is locked out.

9. The system of claim 8, wherein the electronic processor (205) is further configured to transmit communications received at the second receiver while the first transmitter is locked out following transmission of the first communication from the second transmitter and transmit communications received at the first receiver while the second transmitter is locked out following transmission of the second communication from the first transmitter, or
wherein the electronic processor (205) is further configured to drop communications received at the second receiver while the first transmitter is locked out following transmission of the first communication from the second transmitter and drop communications received at the first receiver while the second transmitter is locked out following transmission of the second communication from the first transmitter.

10. The system of claim 7, wherein the electronic processor (205) performs the lock out of the first transmitter and the lock out of the second transmitter via a single programmable logic chip.

11. The system of claim 10, wherein detecting the first communication includes detecting a falling edge of a first bit of the first communication, and
wherein locking out the first transmitter includes
generating, from a clock (401) of the electronic processor (205), a first predetermined pulse signal corresponding to a frame time of the first communication;
outputting a second predetermined pulse signal to an upstream control input of the programmable logic chip; and
disconnecting, within the programmable logic chip, the first transmitter from an upstream transmit enable signal,
wherein detecting the second communication includes detecting a falling edge of a first bit of the second communication, and
wherein locking out the second transmitter includes
generating, from the clock (401) of the electronic processor (205), a second predetermined pulse signal corresponding to a frame time of the second communication;
outputting the second predetermined pulse signal to a downstream control input of the programmable logic chip; and
disconnecting, within the programmable logic chip, the second transmitter from a downstream transmit enable signal,
wherein, preferably, the clock (401) is a crystal programmable clock.

12. The system of claim 7, wherein the first electronic communications device is either one of another electronic communications system extender device or a control panel (102).

13. The system of claim 7, wherein the second electronic communications device is either one of another electronic communications system extender device or a peripheral device (106),
wherein, preferably, the peripheral device (106) includes at least one selected from the group consisting of a biometric sensor, an RFID tag sensor, a surveillance camera, a motion sensor, an entryway access control module, and an alarm system.

14. The system of claim 7, wherein the system is a security surveillance system.

15. A method of operating an electronic communications system extender device of a wired security surveillance communications network, the electronic communications system extender device including a first transmitter configured to transmit communications over a first serial communications bus, the first serial communications bus being connected to a first electronic communications device upstream from the electronic communications system extender device, a first receiver configured to receive communications over the first serial communications bus, a second transmitter configured to transmit communications over a second serial communications bus, a second receiver configured to receive communications from the second serial communications bus, the second serial communications bus being connected to a second electronic communications device downstream from the electronic communications system extender device, the method comprising:
receiving a first communication from the first receiver from the first serial communications bus;
transmitting, via the second transmitter, the first communication from the first receiver over the second serial communications bus in response to receiving the communication from the first receiver;
locking out, during transmission of the first communication over the second serial communications bus, the first transmitter from transmitting over the first serial communications bus;
receiving a second communication from the second receiver from the second serial communications bus;
transmitting, via the first transmitter, the second communication from the second receiver over the first serial communications bus in response to receiving the second communication from the second receiver; and
locking out, during transmission of the second communication over the first serial communications bus, the second transmitter from transmitting over the second serial communications bus.
